# EUROPEAN PATENT APPLICATION

(11) **EP 1 560 211 A1**
(43) Date of publication of application: **03.08.2005**
(21) Application number: 03808893.6
(22) Date of filing: 29.09.2003
(51) Int. Cl.: G11B 7/24, G11B 7/26

(54) **OPTICAL INFORMATION RECORDING MEDIUM AND PRODUCTION METHOD THEREFORE, PRODUCTION DEVICE**

(30) Priority: 01.10.2002 JP 2002288595
(71) Applicant: MATSUSHITA ELECTRIC INDUSTRIAL CO., LTD., Kadoma-shi, Osaka 571-8501 (JP)
(72) Inventor: TOMIYAMA, Morio, Nara 630-0136 (JP); ITO, Eiichi, Hyogo 663-8033 (JP)
(74) Representative: Eisenführ, Speiser & Partner
(86) International application number: PCT/JP2003/012393
(87) International publication number: WO 2004/036570

(57) **Abstract**

The present invention relates to an optical information recording medium comprising a signal substrate that has at least a signal face formed on one of the faces thereof with a center hole, a center substrate that is placed in a manner so as to seal the center hole and also to be made flat with the signal face of the signal substrate and a transparent layer that is formed on the signal face of the signal substrate and at least one portion of the center substrate, wherein a means used for carrying out a clamping process is provided in the center substrate, and a manufacturing apparatus for such an optical information recording medium.

## Description

### FIELD OF THE INVENTION

This invention relates to an optical information recording medium that carries out information recording and reproducing processes by directing light to a signal recording face through a transparent layer that transmits light, and also concerns a manufacturing method and a manufacturing apparatus thereof.

### DESCRIPTION OF THE RELATED ART

In recent years, along with expansion of the amount of information required for information machines and equipment, image audio equipment, etc., public attention has been focused on optical disks that allow easy data access, storage of large amount of data and miniaturization of apparatuses, as recording media, and high-density recorded information has been achieved by using such optical disks. For example, in an attempt to provide high-density optical disks, an optical disk having a capacity of about 25 GB, which uses a recording/reproducing laser light source having a wavelength of about 400 nm and a recording/reproducing head having a numerical aperture (NA) of 0.85 serving as an condenser lens for converging laser light, has been proposed (for example, see Japanese Patent Application Laid-Open No. 10-289489 (paragraphs 3 to 6, Fig. 1)).

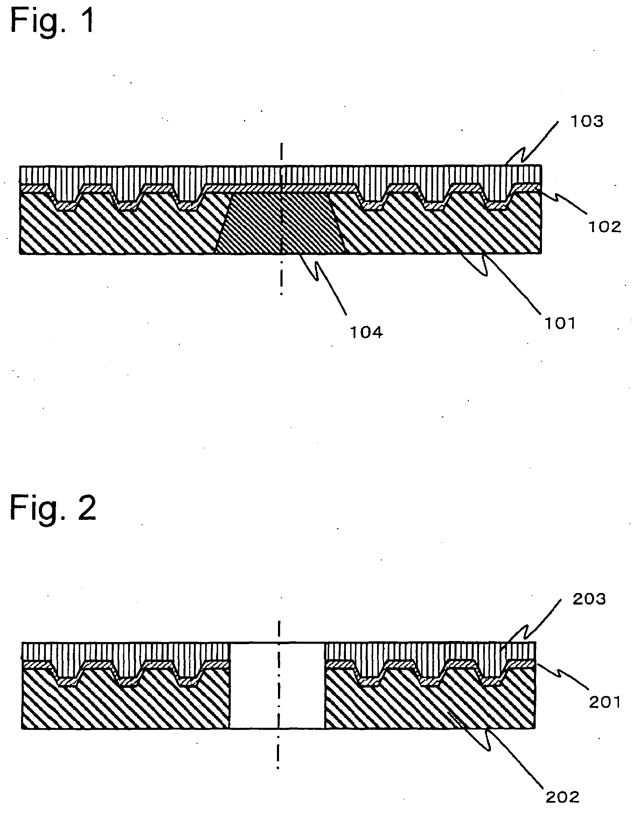

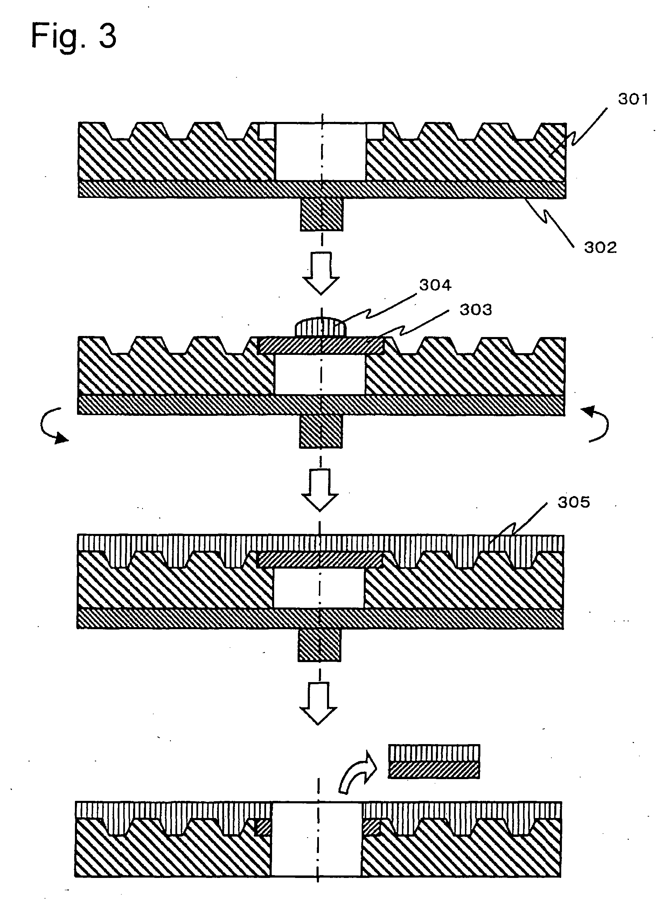

Referring to Figs. 2 and 3, the following description will discuss a structure of a conventional optical disk and a manufacturing method thereof.

Fig. 2 is a cross-sectional view that shows a spin-coat optical disk that is a conventional optical disk. The spin-coat optical disk is constituted by a signal substrate 202, made of resin having a thickness of about 1.1 mm, in which signal pits and recording tracks are copied and formed on one face through injection-compression molding by using a resin material such.as polycarbonate as concavities and convexities with an information recording layer 201 made from a recording layer material, a reflective layer material and the like being formed on the face bearing the signal pits and the recording tracks through a method such as sputtering and vapor deposition, and a transparent layer 203, made from a resin that is transparent to recording/reproducing light, which is formed by using a photocurable material such as an ultraviolet-ray-setting resin through a spin-coating process, with a thickness of about 0.1 mm. In order to carry out an information-recording or information-reproducing process on the information recording layer 201, laser light, released from the recording/reproducing head, needs to be directed to the information recording layer 201 through the transparent layer 203, and at this time, the spot size of the laser light converged on the information recording layer 201 is varied due to thickness variations in the transparent layer 203 through known aberration, causing size deviations in a signal upon recording the signal on the information recording layer 201 and reproduced signal jitters upon reproducing the signal from the information recording layer 201. Therefore, it is important to form the transparent layer 203 with a uniform thickness.

Fig. 3 shows a manufacturing method for a conventional optical disk in which a transparent layer 203 is formed through a spin-coating process of ultraviolet-ray-setting resin in order to uniformly form the thickness of the transparent layer 203.

First, a signal substrate 301 on which an information recording layer made of a recording layer material, a reflective layer material and the like is formed is fixed on a rotation table 302 in a manner so as to minimize the amount of eccentricity with respect to the rotation axis, and a center substrate 303 is placed on a center hole of the signal substrate 301 in a manner so as to seal the center hole. An ultraviolet-ray-setting resin 304 is applied onto the center substrate 303, and by spinning the rotation table 302, the signal substrate 301 is rotated so that the thickness of a transparent layer 305 is uniformly adjusted from the inner circumference toward the outer circumference on the substrate 301. The method in which the center substrate 303 is used provides effects for uniformly forming the thickness of the transparent layer 305 on the disk inner circumferential portion and for reducing inner and outer differences thereof, in comparison with a method without using the center substrate that seal the center hole in which, for example, an ultraviolet-ray-setting resin is applied to the vicinity of the center hole of the substrate 301 with a ring shape. The center substrate 303 is removed after completion of the spin-rotations so that the center hole of the signal substrate 301 is formed; lastly, the ultraviolet-ray-setting resin is irradiated with ultraviolet rays to be cured. Alternatively, after completion of the spin-rotations, the ultraviolet-ray-setting resin is irradiated with ultraviolet rays so as to be cured, and the center substrate 303 is subjected to a punching process with the same diameter as the center hole of the signal substrate 301 to form the center hole.

### DISCLOSURE OF THE INVENTION

### (Technical Problem to be Solved by the Invention)

However, in the case of the optical disk manufactured by the above-mentioned manufacturing method, the center substrate needs to be removed each time a disk is manufactured, and the manufacturing apparatus requires a mechanism that carries out detaching and attaching processes of the center substrate for each of disks. Moreover, after applying a ultraviolet-ray-setting resin, the ultraviolet-ray-setting resin tends to remain on the center substrate, making it difficult to carry out the detaching process of the center substrate. Furthermore, since the disk clamping method is limited to the structure using the center hole of the signal substrate, the mechanism for rotating the disk including the clamping mechanism tends to have interference with the recording/reproducing head upon carrying out a recording/reproducing process of signals located on the disk inner circumferential portion, causing a limitation in an attempt to expand the recording area in the disk inner circumferential portion toward the center.

The present invention has been made to solve the above-mentioned conventional problems, and its objective is to provide an optical information recording medium in which a signal-recording area is expanded in the inner circumference of the optical information recording medium and thickness irregularities are reduced in the transparent layer within the disk plane, a manufacturing method for an optical information recording medium in which by making a center substrate unite with an optical information recording medium, the optical information recording medium is more effectively manufactured, and a manufacturing apparatus thereof.

(Means to solve the Problems) In order to solve the above-mentioned problems, one aspect of the present invention relates to an optical information recording medium that is provided with: a signal substrate that has a signal face formed on at least one of the faces thereof with a center hole; a center substrate that is placed in a manner so as to seal the center hole and also to be made flat with the signal face of the signal substrate; and a transparent layer that is formed on the signal face of the signal substrate and at least one portion of the center substrate, and in this structure, means used for carrying out a clamping process is provided in the center substrate.

In accordance with another aspect of the present invention, the optical information recording medium is characterized in that the thickness of the center substrate is made equal to or greater than the thickness of the signal substrate, and also set to be not more than 1.2 mm.

In accordance with still another aspect of the present invention, the optical information recording medium is
characterized in that the transparent layer is formed through processes in which a photocurable resin is applied to the center substrate and drawn to expand thereon through spinning rotations.

In accordance with still another aspect of the present invention, the optical information recording medium is characterized in that the center substrate and the signal substrate are bonded to each other by using a photocurable resin.

In accordance with still another aspect of the present invention, the optical information recording medium is characterized in that the signal substrate and the center substrate are melt by heat and bonded to each other on the side opposite to the signal face of the signal substrate.

In accordance with still another aspect of the present invention, the optical information recording medium is characterized in that the joining portion of the signal substrate and the center substrate is made of the same material.

In accordance with still another aspect of the present invention, the optical information recording medium is characterized in that the end face of the center hole of the signal substrate and the end face of the center substrate are formed into tapered shapes.

In accordance with still another aspect of the present invention, the optical information recording medium is characterized in that the end face of the center hole of the signal substrate and the end face of the center substrate are formed into faces, each having concavities and convexities.

In accordance with still another aspect of the present invention, the optical information recording medium is characterized in that a material forming the center substrate is a magnetic material or a material containing a magnetic material.

In accordance with still another aspect of the present invention, the optical information recording medium is characterized in that a clamp unit, formed in the center substrate, contains a material having a thermal conductivity of not less than 10 W/mK.

In accordance with still another aspect of the present invention, the optical information recording medium is characterized in that a reflective layer is formed on the center substrate that forms the same face as the signal face of the signal substrate.

In accordance with still another aspect of the present invention, the optical information recording medium is characterized in that the same material as an information recording material formed on the signal face of the signal substrate is formed on the center substrate that forms the same face as the signal face of the signal substrate.

In accordance with still another aspect of the present invention, the optical information recording medium is characterized in that a clamp portion, used for rotating the disk, is provided on the side opposite to the signal face.

In accordance with the other aspect of the present invention, the optical information recording medium is characterized in that the clamping means placed in the center substrate is a through hole, and the size of the hole is made smaller than the minimum outer diameter of the center substrate.

Another aspect of the present invention relates to a manufacturing apparatus for an optical information recording medium, which is a manufacturing apparatus for an optical information recording medium that comprises a signal substrate that has a signal face formed on at least one of the faces thereof with a center hole, a center substrate that is placed in a manner so as to seal the center hole and to be made flat with the signal face of the signal substrate, an information recording layer that is at least formed on the signal face of the signal substrate and a transparent layer that is formed on the signal face of the signal substrate and at least one portion of the center substrate, and has a structure in which a means used for carrying out a clamping process is provided in the center substrate, and in this structure, the manufacturing apparatus is provided with: at least a means for inserting the center substrate into the signal substrate in a manner so as to seal the center hole and also to be made flat with the signal face of the signal substrate having the center hole, a means for spin-rotating the signal substrate and the center substrate on a rotation table in an integrated state, with photocurable resin dropped on the center substrate, so that the photocurable resin is drawn and expanded, and a means for curing the photocurable resin through light irradiation so that the center substrate and the signal substrate are formed into an integral part.

In accordance with still another aspect of the present invention, the manufacturing apparatus for an optical information recording medium is characterized in that the inserting means includes processes in which after the center substrate has been fixed onto the rotation table, the signal substrate is sucked onto the table.

In accordance with still another aspect of the present invention, the manufacturing apparatus for an optical information recording medium is characterized in that the center substrate is made of a magnetic material or a material containing a magnetic material, and the inserting means includes a means for fixing the center substrate onto the table through a magnetic force and a means for vacuum-sucking the signal substrate onto the table.

In accordance with still another aspect of the present invention, the manufacturing apparatus for an optical information recording medium is characterized in that the inserting means includes a process in which after the signal substrate has been placed on the rotation table, the center substrate is sucked onto the table.

In accordance with still another aspect of the present invention, the manufacturing apparatus for an optical information recording medium is provided with a means for bonding the center substrate and the signal substrate to each other through a photocurable resin, and a curing process of the photocurable resin and the curing process of the photocurable resin of the transparent layer are simultaneously carried out.

In accordance with still another aspect of the present invention, the manufacturing apparatus for an optical information recording medium is provided with a means for forming an information recording layer after the signal substrate and the center substrate have been formed into an integral part.

In accordance with still another aspect of the present invention the manufacturing apparatus for an optical information recording medium is provided with a means for melting by.heat and bonding the signal substrate and the center substrate to each other on the side opposite to the signal face of the signal substrate.

In accordance with still another aspect of the present invention, the manufacturing apparatus for an optical information recording medium is characterized in that the rotation table has a function for magnetically fixing the center substrate made of a magnetic material or a material containing a magnetic material and a function for fixing the signal substrate through vacuum suction.

In accordance with still another aspect of the present invention, the manufacturing apparatus for an optical information recording medium is provided with a means for applying a bonding agent or a photocurable material to the end face of the center substrate, and in this structure, the rotation table has a function for sucking the center substrate and the signal substrate.

In accordance with the other aspect of the present invention, the manufacturing apparatus for an optical information recording medium is provided with a rotation table having a function for sucking one portion of the face of the transparent layer, and a melt-bonding means for melting by heat and bonding the center substrate and the signal substrate to each other.

### BRIEF DESCRIPTION OF THE DRAWINGS

Fig. 1: a cross-sectional view that shows an optical recording medium in accordance with the present invention.
Fig. 2: a cross-sectional view that shows a spin-coat optical disc in accordance with the prior art techniques.
Fig. 3: a flow chart that schematically shows a manufacturing method for an optical recording medium in accordance with prior art techniques.
Fig. 4: a cross-sectional view that shows a state in which a center substrate and a signal substrate of the optical recording medium in accordance with the present invention are bonded to each other through faces, each having concavities and convexities.
Fig. 5: a perspective view that schematically shows an information-recording face on the center substrate of the optical recording medium in accordance with the present invention.
Fig. 6: a cross-sectional view of an optical recording medium that is provided with a clamp with a hole, which is one example of the optical recording medium of the present invention.
Fig. 7: a cross-sectional view of an optical recording medium that is provided with a magnet clamp, which is one example of the optical recording medium of the present invention.
Fig. 8: a cross-sectional view of an optical recording medium in which a magnetic material is used for the center substrate of the optical recording medium in accordance with the present invention.
Fig. 9: a drawing that schematically shows one example of manufacturing processes of the optical recording medium of the present invention.
Fig. 10: a drawing that shows a thickness distribution of a transparent layer of the optical recording medium in accordance with the present invention.
Fig. 11: a flow chart that schematically shows a method in which a center substrate and a signal substrate of the optical recording medium in accordance with the present invention are bonded to each other by using a bonding agent.
Fig. 12: a flow chart that schematically shows a method in which a center substrate and a signal substrate of the optical recording medium in accordance with the present invention are bonded to each other through melting by heat and bonding.
Fig. 13: a flow chart that schematically shows one example of a manufacturing method for an optical information recording medium in accordance with the present invention.
Fig. 14: a flow chart that schematically shows a manufacturing method for an optical recording medium that is provided with a clamp portion with a hole formed in the central substrate of the present invention.
Fig. 15: a flow chart that schematically shows a manufacturing method for an optical recording medium that is provided with a magnet clamp portion formed on the central substrate of the present invention.
Fig. 16A: a structural drawing that schematically shows a apparatus used for carrying out the manufacturing method for an optical recording medium in accordance with the present invention.
Fig. 16B: a structural drawing that schematically shows the apparatus of Fig. 16A when viewed from above.

### EMBODIMENTS OF THE INVENTION

The following description will discuss specific embodiments of the present invention. The present embodiments explain a case in which a disc-shaped optical medium is used; however, not limited to the optical disk and shape of this type, the present invention may be applied to various optical recording media, such as ROM-type optical disks, magneto-optical disks and phase-change optical disks, which have fine concavities and convexities in an information recording layer and carry out recording and reproducing operations of signals by directing a recording/reproducing laser beam onto the information recording layer through a transparent layer.

Fig. 1 is a cross-sectional view that shows one example of an optical recording medium in accordance with the present invention.
(a) A disc-shaped signal substrate 101 as the first layer, having a signal face made of concavities and convexities, which is formed on one of the faces through an injection compression molding process by using a resin such as polycarbonate; and having a thickness of about 1.1 mm so that a total thickness of the disk is about 1.2 mm in order to increase the disk rigidity and also to provide thickness compatibility to disks such as CDs and DVDs.
(b) An information recording layer 102 as the second layer, prepared by forming a reflective layer mainly containing Ag on the signal face of the signal substrate 101 through a method such as sputtering.
(c) A transparent layer 103 as the third layer, which is made of an ultraviolet-ray curing resin that is virtually transparent to recording/reproducing light (virtually light-transmittable), with a thickness of about 0.1 mm.
(d) A center substrate 104, which is made of a resin material such as polycarbonate, and placed in a manner so as to seal the center hole of the signal substrate 101.

The following description will discuss the forms of the center substrate 104.

Upon clamping the disk on a rotation axis used for rotating the disk, since the entire clamping area is located in the center substrate 104, the thickness of the center substrate 104 is set to the same as that of the signal substrate 101 so as to increase the joining area to the signal substrate 101, in order to improve the joining rigidity to the signal substrate 101. The center substrate 104 and signal substrate 101 are made in contact with each other on tapered faces thereof so that the joining area is further increased and the joining rigidity between the center substrate 104 and the signal substrate 101 is further increased.

The present embodiments explain a case in which a disc-shaped center substrate 104 is used; however, those substrates having another shape, such as an elliptical shape and a rectangular shape, may be used.

The center substrate 104 and the signal substrate 101 are made of the same material, and, for example, in the case when the center substrate 104 and the signal substrate 101 are joined to each other by applying a bonding agent, such.as an ultraviolet-ray-setting resin and a pressure-sensitive bonding agent, to the taper faces, it becomes possible to certainly improve the adhesive property to the center substrate by selecting a material for the bonding agent having a good adhesive property to the signal substrate 101. In the case when the bonding process is carried out by using an ultraviolet-ray-setting resin, it is effective to conduct the bonding process simultaneously as the transparent layer 103 formed by an uncured ultraviolet-ray-setting resin is cured by applying ultraviolet rays thereto.

The center substrate 104 and the signal substrate 101 are joined to each other by carrying out a melt-bonding process on the surface of the signal substrate 101 opposite to the signal face so that it becomes possible to improve the joining rigidity. Also in the case of the melt-bonding process, the center substrate 104 and the signal substrate 101 are made of the same material, so that the adhesive properties of both of the substrates are improved. In this case, since the melt-bonding process is carried out on the surface opposite to the signal face, the resulting effect is that irregularities that occur upon melt-bonding are not formed on the signal face side; thus, it becomes possible to prevent thickness irregularities of the ultraviolet-ray-setting resin from occurring when a liquid-state ultraviolet-setting-resin is expanded through spin-rotations of the signal substrate 101 to form a transparent layer 103.

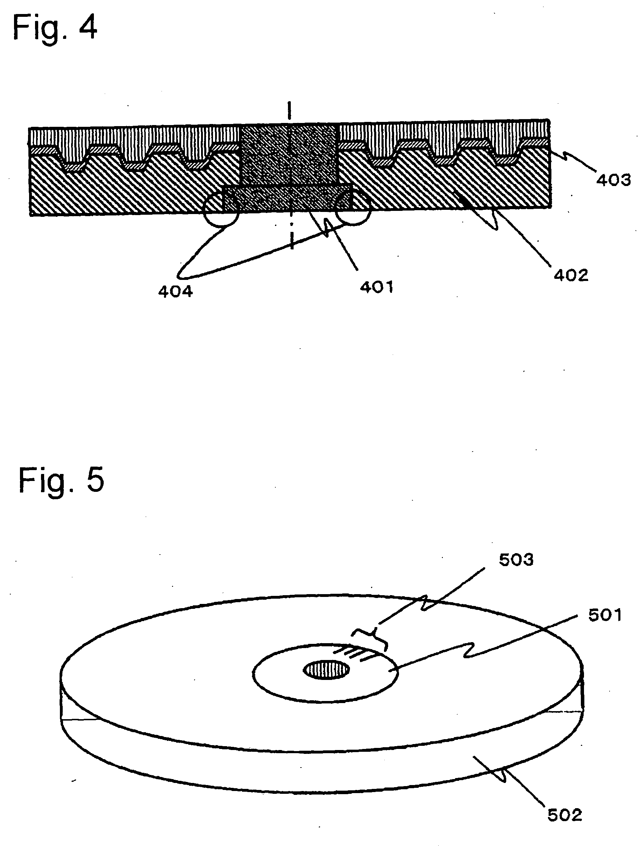

Next, Fig. 4 shows a case in which the center substrate 104 is bonded to the signal substrate 101 through faces, each having concavities and convexities. Also in this case, it becomes possible to increase the joining area upon carrying out a joining process by using a bonding agent such as an ultraviolet-ray-setting resin and a pressure-sensitive bonding agent in the same manner as the contact process using tapered faces, and consequently to increase the joining rigidity between the center substrate 401 and the signal substrate 402. Also in the melt-bonding process also, the same effects as the contact process using tapered faces can be obtained. For example, in the case when the melt-bonding process is carried out on the face opposite to the signal face 403 of the signal substrate 402, by using a melt-bonding portion 404 as a portion to be melt-bonded so that the volumes of the center substrate 401 and the signal substrate 402 to be melt-bonded are increased so that a joining process is carried out in wider areas.

The center substrate 401 has an information recording face in the same face as the signal face of the signal substrate 402. Fig. 5 shows an information-recording face of the center substrate 501. For example, in the present embodiment, prior to bonding the center substrate 501 to the signal substrate 502, a material, which can be cut by using laser such as YAG laser, for example, aluminum (Al), is deposited on the face of the center substrate 501 on the same side of the signal face of the signal substrate 502 with a thickness in a level from 50 nm to 100 nm by using a sputtering apparatus, and a transparent layer is formed integrally with the signal substrate 502, and then bar-code-like disk information 503 can be written therein by using laser. Alternatively, a disk having the same structure can be formed through processes in which, after bonding the center substrate 501 to the signal substrate 502 to form an integral substrate, the signal face of the signal substrate 502 and the face of the center substrate 501 on the same side as the signal face are subjected to layer-forming processes at the same time.

In the above explanation, the directions of tapers and concavities and convexities of the center substrate are designed so that the center substrate is inserted from the face opposite to the signal face of the signal substrate; however, the tapers and concavities and convexities of the center substrate and the signal substrate may be inverted in order to insert the center substrate from the signal face. Although the embodiment has discussed the case in which the thickness of the center substrate is set to the same as the thickness of the signal substrate, the thickness of the center substrate may be made thicker than the signal substrate in order to maintain sufficient rigidity of the clamping area in the case when the signal substrate is thin. When the compatibility in clamping between CDs and DVDs is taken into consideration, the thickness of the center substrate is preferably set to not more than 1.2 mm. By using a material, such as a phase-change recording material and a magnetic recording material, as an information recording material to be used for forming a layer on the center substrate, and by using a laser device formed of a material such as GaN so as to record and reproduce information on and from the information recording material, it becomes possible to form a rewritable information recording area.

The following description will discuss a clamp unit formed on the center substrate.

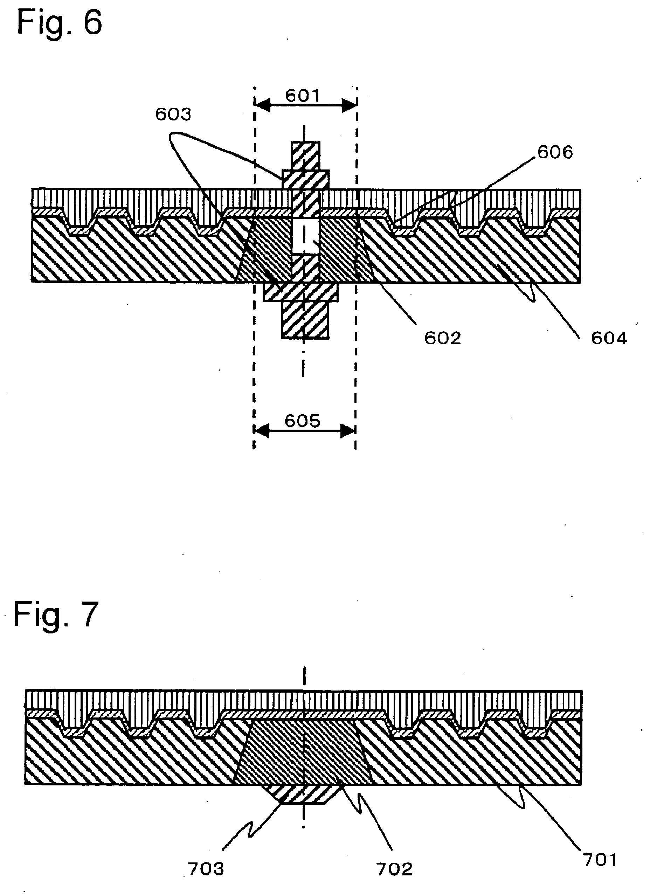

Fig. 6 is a cross-sectional view that shows one example of an optical disk that is provided with a clamp unit with a hole in accordance with the present invention.

In order to clamp a disk onto a rotation axis used for rotating the disk, a center hole 602 is formed in the center of the disk with a diameter smaller than the minimum outer diameter 601 of the center substrate in a manner so as to penetrate the disk. A disk clamping mechanism 603 allows a clamping process within an area smaller than the minimum inner diameter 605 of the signal substrate 604, so that the signal area 606 that belongs to the signal substrate 604 can be formed up to the vicinity of the minimum inner diameter 605 of the signal substrate 604. The use of the center hole 602 as a clamping means allows a clamping process of the signal substrate 604 from the signal face side or from the opposite face side.

As shown in Fig. 7, with respect to a means for clamping a disk by using a magnetic force instead of the clamp unit with a hole, a magnet clamp 703, made of a material such as magnetic SUS, may be placed on the center substrate 702 on the face opposite to the signal face of the signal substrate 701. Since this magnet clamp 703 can be preliminarily attached to the center substrate 702 before bonding the signal substrate 701 to the center substrate 702, this magnet clamp 703 is also utilized upon handling the center substrate 702 when the signal substrate 701 and the center substrate 702 are bonded to each other.

By attaching the magnet clamp 703 to the face opposite to the signal face of the signal substrate 701, the disk clamp unit is placed on the face opposite to the signal face so that a recording/reproducing head is allowed to move up to the inner circumference of the disk, with the inner circumferential portion of the disk being used as a signal recording area.

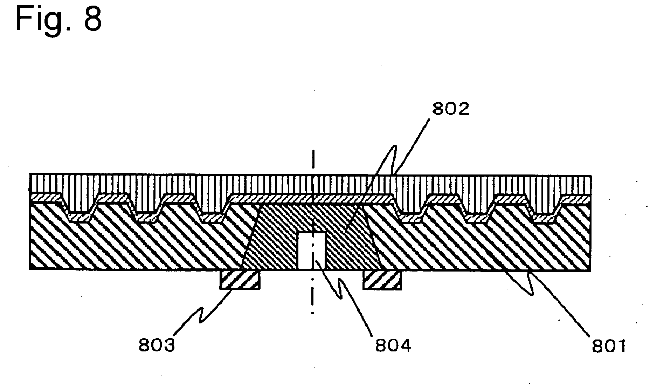

By using a magnetic material as the material for the center substrate as shown in Fig. 8, it is also possible to achieve a disk that can be magnet-clamped. For example, the following description will discuss a case in which magnetic SUS is used as the material for the center substrate.

Since the center substrate is made of magnetic SUS, it is difficult to carry out the bonding process between the signal substrate 801 and the center substrate 802 by using a bonding agent such as an ultraviolet-ray-setting resin and a pressure-sensitive bonding agent; therefore, a melt-bonding portion 803 of the signal substrate 801 is heated to melt, and put over the center substrate 802 so as to be embedded. In this case, a recessed portion 804 used for eccentricity adjustments is formed in the center portion of the center substrate, so as to minimize the amount of eccentricity between the rotation centers of the clamping mechanism and the disk.

It has been found that heat is transmitted from the rotation axis used for rotating the disk to the clamping mechanism due to continuous rotations of the disk and the environment, with the result that a warp occurs in the disk caused by the thermal influences. Therefore, a sheet, made from a material having a low heat conductivity, for example, a ceramic material, may be bonded onto the center substrate of the disk between the clamping mechanism and the center substrate; thus, it becomes possible to make the heat difficult to be transmitted from the clamping mechanism to the disk.

The following description will discuss a manufacturing method for an optical information recording medium in accordance with the present invention.

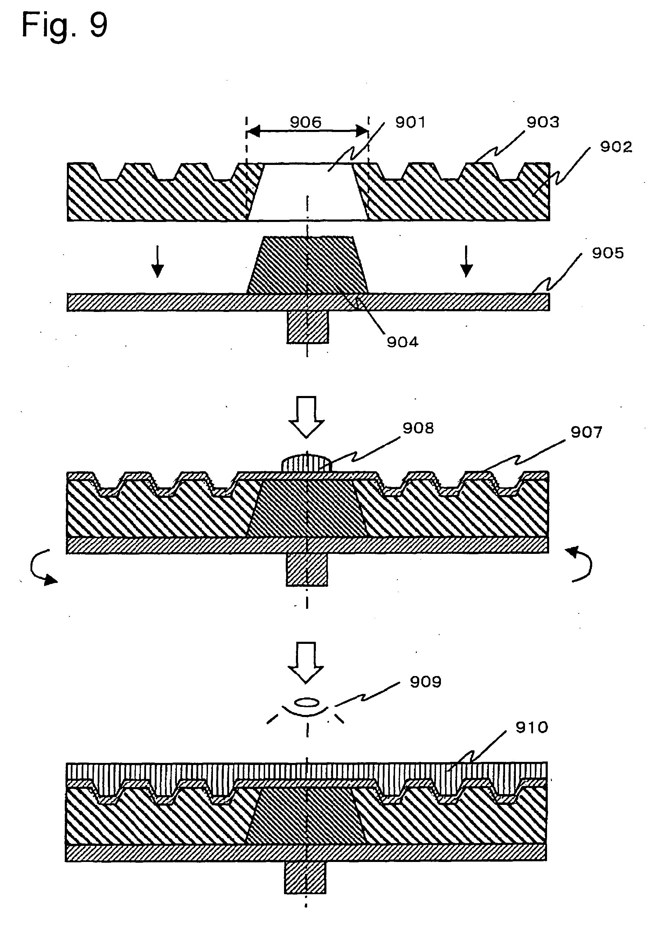

Fig. 9 shows one example of a manufacturing method for the optical information recording medium relating to the present invention.

First, a signal substrate 902, which is provided with a center hole 901 having a taper in a manner so as to expand the hole diameter from the signal face side toward the face opposite to the signal face, is first prepared. The signal substrate 902, which is formed through an injection-compression molding process of resin, is a substrate having a thickness of 1.1 mm with a signal face 903 constituted by concavities and convexities being formed on one face through molding and transferring processes, and is made of, for example, polycarbonate. With respect to the material for the signal substrate 902, not limited to polycarbonate resin, for example, a resin that can be injection-compression-molded, such as a polyolefin-based resin and an acryl-based resin, may be used. The signal substrate 902 is fixed onto a rotation table 905 on which the center substrate 904 has been preliminarily fixed in the center, through a vacuum suction or the like. Thus, the signal substrate 902 is eccentricity-adjusted by the center substrate 904 so that it is placed in the center position on the rotation table 905, while the center hole 901 is sealed by the center substrate 904 at the same time. The center substrate 904 has a thickness of 1.1 mm in the same manner as the signal substrate 902, and is made from an injection-compression molding process of polycarbonate resin. For example, a center substrate 904, formed into the same shape with the same thickness of 1.1 mm as the signal substrate 902 by placing a taper to the end face of a disc having the same outer diameter as the hole diameter 906 of the center hole on the side opposite to the signal face of the signal substrate 902, may be used. Since the signal substrate 902 and the center substrate 904 have the same thickness, the center hole 901 of the signal substrate 902 is sealed with the center substrate 904, so that the signal face 903 of the signal substrate 902 and the center substrate 904, which form the same face, are virtually formed into a flat face.

Next, an information recording layer 907, which is formed as a reflective layer mainly composed of Ag, is formed on the same face including the signal face 903 of the signal substrate 902 and the center substrate. 904 through a method such as sputtering. With respect to the material for the information recording layer 907, not limited to the reflective layer mainly containing Ag, for example, another metal reflective layer, phase-change recording material, magnetic recording material or the like may be used. After the signal substrate 902 and the center substrate 904 have been formed into an integral part, the resulting substrate is subjected to a layer-forming process as a whole so that the reflective layer, formed on the signal substrate 902, and the reflective layer, formed on the center substrate 904, are made to have the same thickness, and allowed to have the same level of reflective indexes upon application of a reproducing laser beam onto the reflective layer through the transparent layer; therefore, in both of the cases when information recorded on the center substrate 904 is reproduced by a reproducing laser beam and when information recorded on the signal substrate 902 is reproduced thereby, the amplitudes of signals read by a reproducing head and obtained by voltage-converting light are made equal to each other. This makes it possible to reduce load to be imposed upon designing a reproducing apparatus.

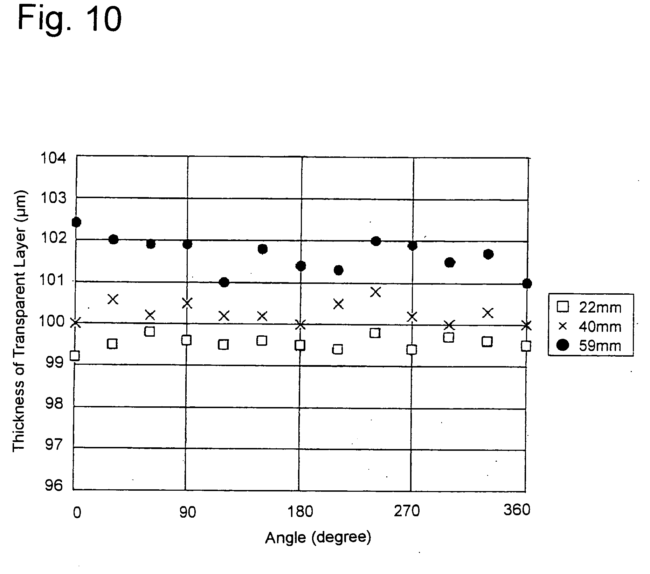

A predetermined amount of ultraviolet-ray-setting resin 908 in an uncured liquid state is dropped onto the center substrate 904 that forms the same face as the signal face 903 of the signal substrate 902 on which the information recording layer 907 is formed, and the rotation table 905 is then rotated at a high speed so that the signal substrate 902 and the center substrate 904 are rotated integrally; thus, the ultraviolet-ray-setting resin 908 is drawn and expanded. While the rotation table 905 is being rotated at a high speed, or after the rotation has been stopped, the drawn and expanded ultraviolet-ray-setting resin is cured by an ultraviolet-ray irradiation device 909 so that a transparent layer 910, made of the ultraviolet-ray-setting resin having a uniform thickness from the inner circumference toward the outer circumference, is formed on the signal substrate 902 and the center substrate 904. Fig. 10 shows a thickness distribution of the transparent layer 910 formed when a signal substrate having an outer diameter of 120 mm is used.

With respect to deviations in the thickness of the transparent layer 910 that cause degradation in the laser converging process, in the case when a reproducing process is carried out by using a reproducing head having, for example, a laser light wavelength of about 400 nm and a numerical aperture of lens of about 0.85 for converging laser light, thickness deviations that are permissible in association with known spherical aberration need to be set in a range up to 4 µm. As clearly shown by Fig. 10, the thickness deviations in the transparent layer 910 are within a range up to 4 µm from the inner circumference toward the outer circumference; thus, it becomes possible to prepare a superior optical recording medium by using the above-mentioned manufacturing method.

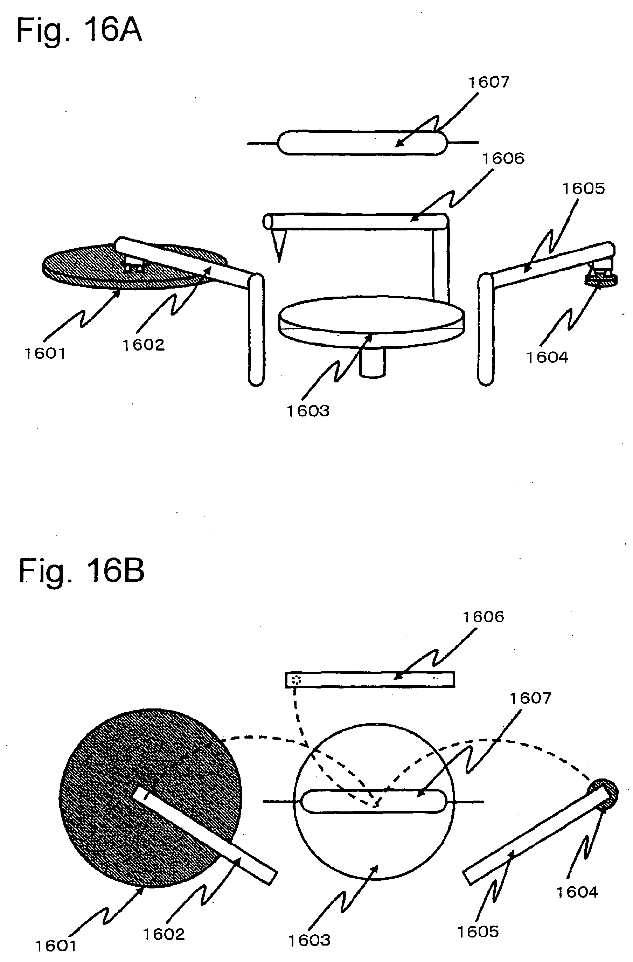

Although the above description has discussed a method for joining the signal substrate after the central substrate has been fixed onto the rotation table, the signal substrate may be joined to the center substrate after the signal substrate has been fixed onto the rotation table, and Fig. 16A shows a schematic structure of a apparatus to which the latter method is applied. Fig. 16B is a structural drawing that schematically shows the apparatus of Fig. 16A when viewed from above.

First, a signal substrate 1601 having a center hole is transported onto a rotation table 1603 by a signal substrate transporting arm 1602, and fixed thereto through a vacuum suction process preliminarily prepared in the rotation table 1603. The center substrate 1604 is transported by a center substrate transporting arm 1605 in a manner so as to seal the center hole of the fixed signal substrate 1601, and fixed thereto through vacuum suction prepared in the rotation table 1603.

When a metal reflective layer, a phase-change recording material and a magnetic recording material have been formed on the respective surfaces of the signal substrate 1601 and the center substrate 1604, the following processes are not required; however, when no layers have been formed on the signal substrate 1601 and the center substrate 1604 at this time, the rotation table 1603 bearing the signal substrate 1601 and the center substrate 1604 fixed thereto is transported to an adjacent layer-forming apparatus for sputtering and vapor deposition in a separate manner, so as to carry out layer-forming processes at one time. In this case, since the layer-forming process is carried out under vacuum, the two substrates need to be fixed by using a higher vacuum suction, or magnet-clamped by using a magnetic material attached to the center substrate 1604 so as not to come off the rotation table 1603 even under vacuum.

Next, a photocurable resin is applied to the center substrate 1604 thus transported by using a dispenser 1606, so that the rotation table 1603 is spin-rotated with the signal substrate 1601 and the center substrate 1604 being integrally formed on the rotation table 1603 so that the photocurable resin is drawn and expanded. Thereafter, the photocurable resin thus drawn and expanded is cured by using an ultraviolet-ray irradiation lamp 1607.

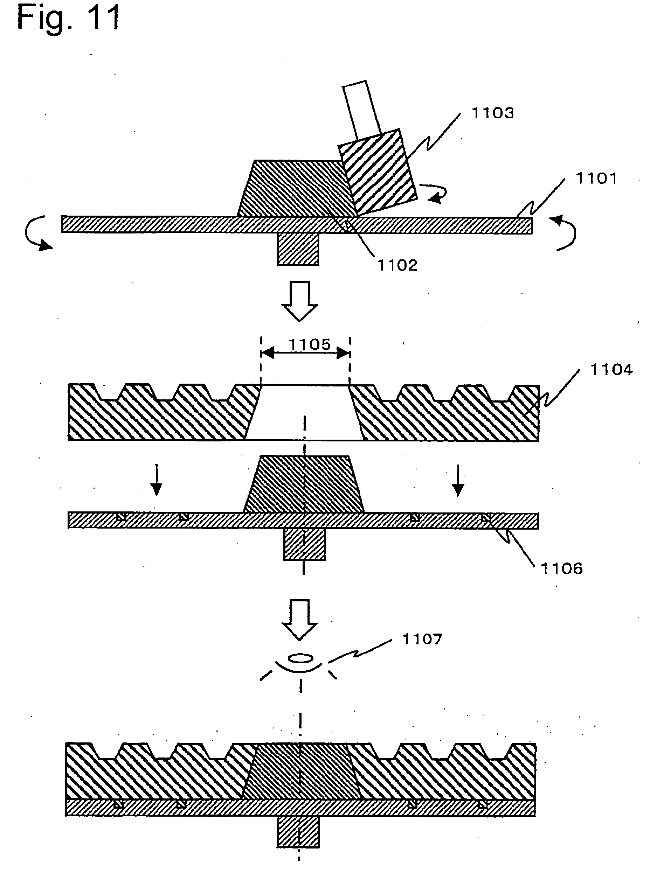

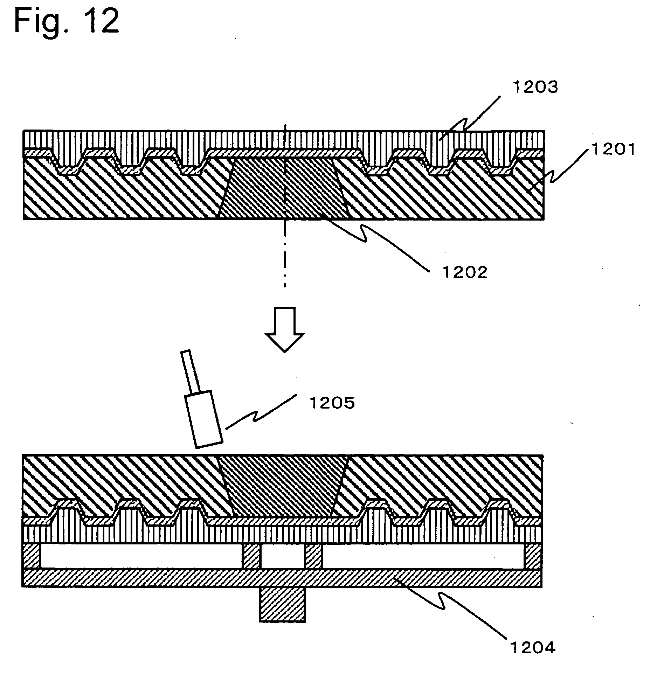

By forming the transparent layer made from the ultraviolet-ray-setting resin on the center substrate and the signal substrate as described above, the center substrate and the signal substrate are integrally formed, and referring to Figs. 11 and 12, the following description will discuss a method for carrying out a melt-bonding process in order to further increase the bonding strength.

Fig. 11 shows a bonding method relating to the present invention in which the center substrate and the signal substrate are bonded to each other by using a bonding agent. The present embodiment will discuss a case in which a pressure-sensitive bonding agent is used as the material for a bonding material; however, not particularly limited to the pressure-sensitive bonding agent, any material may be used as long as it exerts a high bonding property to polycarbonates and acrylic materials.

With respect to the center substrate 1102 fixed in the center of the rotation table 1101, a bonding agent is applied to the end face thereof with a uniform thickness by using a roller 1103 on the surface of which a bonding agent has been preliminarily applied, prior to being integrally formed with the signal substrate. In order to apply the bonding material to the entire end face of the center substrate 1102, the roller 1103 is pressed onto the end face of the center substrate 1102 with a predetermined pressure, and while this pressure is being maintained, the rotation table 1101 is rotated so that the bonding_material is applied to the entire end face of the center substrate 1102. Next, the signal substrate 1104 is fitted so that the center substrate 1102 is inserted into the center hole 1105; thus, the center hole 1105 of the signal substrate and the outer diameter of the center substrate 1102 are position-adjusted through tapers formed on the respective end faces, and the signal substrate 1104 is sucked by a predetermined pressure exerted by a vacuum suction mechanism 1106 on the rotation table 1101, so that the respective substrates are bonded to each other, with the bonding faces being applied by a pressures. When the center substrate 1102 and the signal substrate 1104 are bonded to each other through ultraviolet-ray-setting resin, the ultraviolet-ray-setting resin is applied to the surface of the roller 1103 in place of the bonding material, the ultraviolet-ray-setting resin is applied to the end face of the center substrate 1102 by the roller 1103 with a uniform thickness in the same manner as the application of the bonding agent, and the signal substrate 1104 is sucked onto the rotation table 1101 with a predetermined pressure by the vacuum suction mechanism 1106, so that pressures are applied to the joining faces so that the center substrate 1102 and the signal substrate 1104 are integrally bonded to each other. Next, the joining faces are irradiated with ultraviolet rays through an ultraviolet-ray irradiation device 1107 with the signal substrate 1104 being maintained in the sucked state by the vacuum suction mechanism 1106, so that the ultraviolet-ray-setting resin is cured; thus, the center substrate 1102 and the signal substrate 1104 are bonded to each other. At this time, adjustments are preferably carried out so that the sum of the inner diameter of the signal substrate 1104 and the thickness of the bonding layer is made equal to the outer diameter of the center substrate 1102; thus, the signal face of the signal substrate 1104 and the surface of the center substrate 1102 are flattened. The irradiation of ultraviolet rays may be applied simultaneously as the transparent layer made from ultraviolet-ray-setting resin to be formed on the center substrate 1102 and the signal substrate 1104 is photo-cured.

Referring to Fig. 12, the following description will discuss a method for carrying out a melt-bonding process to bond the center substrate and the signal substrate to each other. According to the above method, after the transparent layer 1203 has been formed on the signal substrate 1201 and the center substrate 1202 by using ultraviolet-ray-setting resin, the signal substrate 1201 and the center substrate 1202, integrally formed, are reversed by the reversing mechanism so that the transparent layer 1203 is placed on the rotation table 1204; thus, one portion of the disk is vacuum-sucked thereto by a predetermined pressure. The substrate thus sucked onto the rotation table 1204, is rotated on the rotation table 1204 while the vacuum-suction state is maintained; thus, the inner circumferential portion of the signal substrate 1201 and the outer circumferential portion of the center substrate 1202 are melt-bonded to each other in a ring shape by an ultrasonic melt-bonding apparatus 1205. The above description has discussed an example in which the ultrasonic melt-bonding apparatus 1205 capable of carrying out a melt-bonding process within a small limited area; however; not limited to this example, the inner circumferential portion of the signal substrate and the outer circumferential portion of the center substrate may be bonded to each other in a stand-still state of the rotation table by using, for example, an ultrasonic melt-bonding apparatus capable of melt-bonding the inner circumferential portion of the signal substrate and the outer circumferential portion of the center substrate at one time. In the above description, an ultrasonic wave is utilized in the melt-bonding apparatus; however, other apparatus capable of carrying out thermal processes using heat-generating coils and laser light may be applied.

The above manufacturing method has discussed a method in which, after the center substrate has been fixed on the rotation table, the signal substrate is joined thereto; however, the disk having the structure of the present invention may be manufactured in the same manner by using a method in which, after the signal substrate has been fixed on the rotation table, the signal substrate is joined to the center substrate.

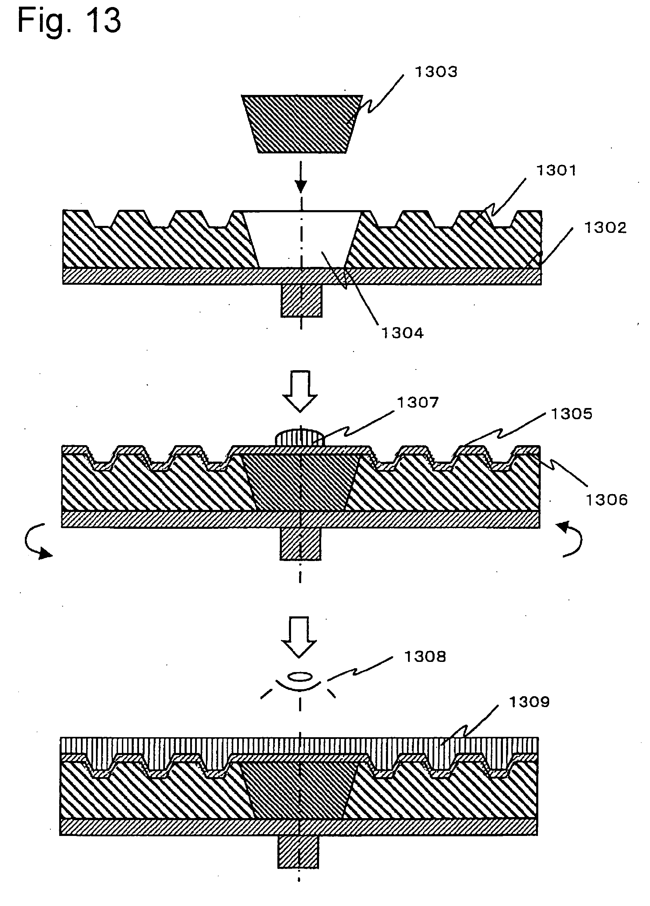

Fig. 13 shows one example of a manufacturing method for an optical information recording medium in accordance with the present invention. For example, a center substrate 1303 is fixed onto a rotation table 1302 on which a signal substrate 1301 has been preliminarily fixed in the center thereof, through vacuum suction or the like. Thus, the center substrate 1303 is eccentricity-adjusted by the signal substrate 1301 so that it is placed in the center position on the rotation table 1302. At this time, the end face of the center substrate 1303 is.uniformly coated with an ultraviolet-ray-setting resin by a roller in the same manner as described above. The center hole 1304 of the signal substrate 1301 is sealed with the center substrate 1303 so that the same face including the signal face 1305 of the signal substrate 1301 and the center substrate 1303 is virtually flattened, and an information recording layer 1306, constituted by a reflective layer, a phase-change recording material, a magnetic recording material and the like, is formed on the same face including the signal face 1305 of the signal substrate 1301 and center substrate 1303. A predetermined amount of ultraviolet-ray-setting resin 1307 in an uncured liquid state is dropped onto the center substrate 1303 that forms the same face as the signal face of the signal substrate 1301 on which the information recording layer 1306 is formed, and the rotation table 1302 is then rotated at a high speed so that the signal substrate 1301 and the center substrate 1303 are rotated integrally; thus, the ultraviolet-ray-setting resin 1307 is drawn and expanded. While the rotation table 1302 is being rotated at a high speed, or after the rotation has been stopped, the drawn ultraviolet-ray-setting resin 1307 and the ultraviolet-ray-setting resin, applied to the side face of the center hole 1304 of the signal substrate 1301 and the end face of the center substrate 1303, are cured by an ultraviolet-ray irradiation device 1308 at one time, so that a transparent layer 1309, made of the ultraviolet-ray-setting resin having an even thickness from the inner circumference toward the outer circumference, is formed on the signal.substrate 1301 and the center substrate 1303.

The following description will discuss a method for forming a clamp unit on the center substrate.

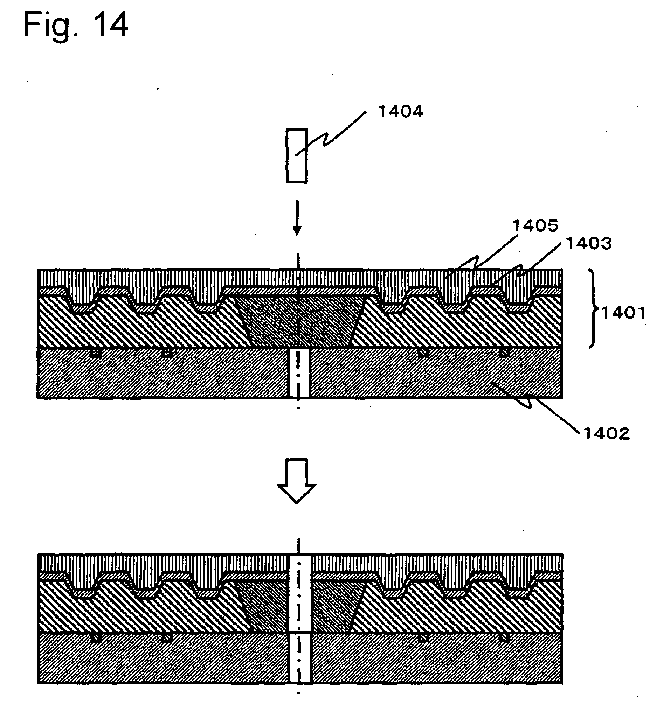

Fig. 14 shows a manufacturing method for an optical recording medium having a clamp unit with a hole on a center substrate.

A punching blade is used so as to form a clamp unit with a hole that has a diameter smaller than the center hole formed in the signal substrate in the disk manufactured as described above. The punching blade is heated to a temperature in a range from 100 degrees to 1000 degrees, and consequently has effects to prevent cracks and burs occurring in the substrate when the center substrate is punched out. First, a disk 1401 is vacuum-sucked onto a punching base 1402, with the center substrate or both of the center substrate and signal substrate being pressed thereon by a predetermined pressure, so that the load to be imposed on the joining portion between the center substrate and the signal substrate, which occurs upon punching the clamp unit with a hole, is reduced. Next, adjustments are made so as to minimize eccentricity between the signal of the signal face 1403 and the punching blade 1404. In order to reduce the load imposed onto the joining portion between the center substrate and the signal substrate, the punching process is carried out by inserting the punching blade 1404 from the transparent layer 1405 side with a widened taper angle to form a through hole. Thus, an optical information recording medium, which has the hole having minimized eccentricity with respect to the signal of the signal face 1403 and a diameter smaller than the center hole of the signal substrate in the center substrate, is obtained.

An optical recording medium, which has a magnet clamping structure on the center substrate in place of the clamp unit with a hole, may be manufactured.

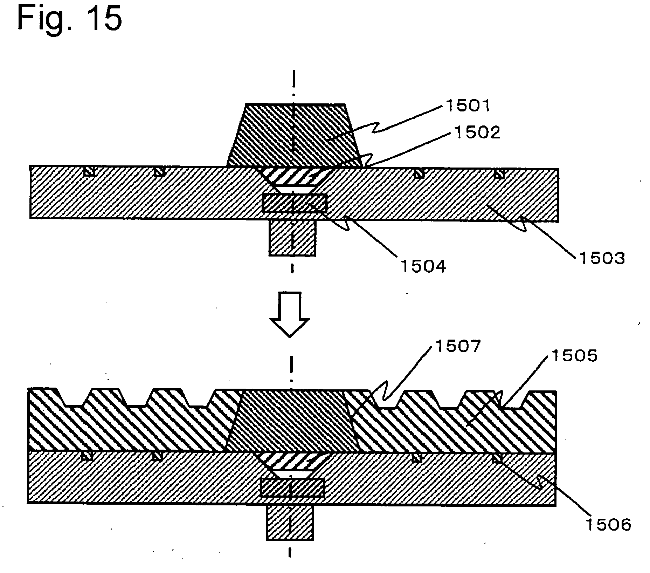

Fig. 15 shows a manufacturing method for an optical recording medium having a magnet clamp unit on a center substrate of the present invention.

First, a clamp unit 1502, made of a magnetic material, is preliminarily attached to a center substrate 1501 through a bonding process using melt-bonding or a bonding agent. The center substrate is fixed by a permanent magnet 1504 that is a clamp unit-fixing means formed in the center portion on the rotation table 1503. The present embodiment has discussed an example in which the permanent magnet is used as the clamp unit-fixing means; however, an electromagnet, which allows selection between fixed and unfixed states of the center substrate on the rotation table 1503 through switching between operative and inoperative states of magnetic force, may be used. In the same manner as the electromagnet, a clamp unit-fixing means, provided with a suction mechanism which allows selection between fixed and unfixed states of the center substrate 1501 on the rotation table 1503, may be used. The signal substrate 1505 is fixed onto the rotation table 1503 on which the center substrate 1501 has been preliminarily fixed in the center thereof, through vacuum suction by using a vacuum suction apparatus 1506 or the like; thus, the signal substrate 1505 is positioned by the center substrate 1501 so as to be set in the center position on the rotation table 1503, with the center hole 1507 being simultaneously sealed with the center substrate 1501. Thereafter, the formation of an information recording layer, the formation of a transparent layer and the bonding processes of the center substrate and the signal substrate are carried out in the same manner as explained above; thus, an optical recording medium, which has the magnet clamp unit on the center substrate on the face opposite to the signal face of the signal substrate, can be manufactured.

The present embodiment has discussed a manufacturing method for an optical recording medium that allows magnet clamping by using a structure in which a magnetic material is added to a resin material of the center substrate; however, it is also possible to provide an optical recording medium that allows magnet clamping by using the center substrate made of a magnetic material. For example, the center substrate made of a magnetic material is fixed by a clamp unit-fixing means that is made of a magnet or the like that has been attached to the center portion on the rotation table in the same manner as described above, so that the signal substrate is fixed onto the rotation table on which the center substrate has been preliminarily fixed in the center thereof, through vacuum.suction or the like; thus, eccentricity adjustments are carried out so that the signal substrate is placed in the center position on the rotation table by the center substrate, while the center hole is sealed by the center substrate at the same time. Thus, it becomes possible to form an optical recording medium that is provided with a center substrate made of a magnetic material. In this case, since the center substrate is made of a magnetic material, it is difficult to bond the center substrate and the signal substrate to each other by using a bonding agent, an ultraviolet-ray-setting resin or the like so as to increase the rigidity; therefore, it is preferable to prepare a structure in which the signal substrate is melted by an ultrasonic melt-bonding apparatus or the like and fixed in a manner so as to cover the center substrate.

The above-mentioned manufacturing method for an optical recording medium makes it possible to expand the signal recording area in the inner circumferential portion of a disk, and also to achieve an effective optical recording medium in which.the center substrate is integrally formed in the optical recording medium so that it becomes possible to eliminate the necessity of attaching and detaching operations of the center substrate, and consequently to achieve an effective optical information recording medium.

### (Advantageous Effects compared to Prior Art)

The present invention having the above-mentioned structure is allowed to exert the following effects.

In accordance with the present invention, since the center substrate is,integrally formed in the optical information recording medium so that it becomes possible to eliminate the necessity of attaching and detaching the center substrate every time the transparent layer is formed, and also to provide an uniform thickness of the transparent layer from the inner circumference toward the outer circumference.

Since the clamping area is formed in the center portion on the center substrate, it is possible to minimize the clamping area in the disk, so that the signal area of the signal substrate can be expanded in the disk center direction, with interference between the recording/reproducing head and the clamping mechanism being suppressed. In this case, the thickness of the center substrate is made equal to or greater than the thickness of the signal substrate, or the joining face of the center substrate and the signal substrate is formed into a tapered shape or a shape with concavities and convexities so that the respective joining areas are increased; thus, it becomes possible to increase the joining rigidity between the center substrate and the signal substrate, and also to further increase the joining rigidity by carrying out melt-bonding processes.

## Claims

1. An optical information recording medium, comprising:
a signal substrate that has at least a signal face formed on one of the faces thereof with a center hole;
a center substrate that is placed in a manner so as to seal the center hole and to be made flat with the signal face of the signal substrate; and
a transparent layer that is formed on the signal face of the signal substrate and at least one portion of the center substrate,
wherein a means used for carrying out a clamping process is provided in the center substrate.

2. The optical information recording medium according to claim 1, wherein a thickness of the center substrate is made equal to or greater than the thickness of the signal substrate, and set to be not more than 1.2 mm.

3. The optical information recording medium according to claim 1 or claim 2, wherein the transparent layer is formed through processes in which a photocurable resin is applied to the center substrate and drawn to expand thereon through spinning rotations.

4. The optical information recording medium according to any one of claims 1 to 3, wherein the center substrate and the signal substrate are bonded to each other by using a photocurable resin.

5. The optical information recording medium according to any one of claims 1 to 4, wherein the signal substrate and the center substrate are melted by heat and bonded to each other on the side opposite to the signal face of the signal substrate.

6. The optical information recording medium according to any one of claims 1 to 5, wherein the joining portion of the signal substrate and the center substrate is made of the same material.

7. The optical information recording medium according to any one of claims 1 to 6, wherein the end face of the center hole of the signal substrate and the end face of the center substrate are formed into tapered shapes.

8. The optical information recording medium according to any one of claims 1 to 6, wherein the end face of the center hole of the signal substrate and the end face of the center substrate are formed into faces, each having concavities and convexities.

9. The optical information recording medium according to any one of claims 1 to 8, wherein a material forming the center substrate is a magnetic material or a material containing a magnetic material.

10. The optical information recording medium according to any one of claims 1 to 9, wherein a clamp unit, formed in the center substrate, contains a material having a thermal conductivity of not less than 10 W/mK.

11. The optical information recording medium according to any one of claims 1 to 10, wherein a reflective layer is formed on the center.substrate that forms the same face as the signal face of the signal substrate.

12. The optical information recording medium according to any one of claims 1 to 10, wherein the same material as an information recording material formed on the signal face of the signal substrate is formed on the center substrate that forms the same face as the signal face of the signal substrate.

13. The optical information recording medium according to any one of claims 1 to 12, wherein a clamp portion, used for rotating the disk, is provided on the side opposite to the signal face.

14. The optical information recording medium according to any one of claims 1 to 13, wherein the clamping means provided in the center substrate is a through hole, and the size of the hole is made smaller than the minimum outer diameter of the center substrate.

15. A manufacturing apparatus, which is a manufacturing apparatus for an optical information recording medium that comprises a signal substrate that has a signal face formed on at least one of the faces thereof with a center hole, a center substrate that is placed in a manner so as to seal the center hole and to be made flat with the signal face of the signal substrate, an information recording layer that is at least formed on the signal face of the signal substrate and a transparent layer that is formed on the signal face of the signal substrate and at least one portion of the center substrate, and has a structure in which a means used for carrying out a clamping process is provided in the center substrate, at least comprising:
a means for inserting the center substrate into the signal substrate in a manner so as to seal the center hole and to be made flush with the signal face of the signal substrate having the center hole;
a means for spin-rotating the signal substrate and the center substrate on a rotation table in an integrated state, with photocurable resin dropped on the center substrate, so that the photocurable resin is drawn and expanded; and
a means for curing the photocurable resin through light irradiation so that the center substrate and the signal substrate are formed into an integral part.

16. The manufacturing apparatus for an optical information recording medium according to claim 15, wherein the inserting means comprises processes in which after the center substrate has been fixed onto the rotation table, the signal substrate is sucked onto the table.

17. The manufacturing apparatus for an optical information recording medium according to claim 15, wherein the center substrate is made of a magnetic material or a material containing a magnetic material, and the inserting means comprises a means for fixing the center substrate onto the table through a magnetic force and a means for vacuum-sucking the signal substrate onto the table.

18. The manufacturing apparatus for an optical information recording medium according to claim 15, wherein the inserting means comprises a process in which after the signal substrate has been placed on the rotation table, the center substrate is sucked onto the table.

19. The manufacturing apparatus for an optical information recording medium according to any one of claims 15 to 18, further comprising:
a means for bonding the center substrate and the signal substrate to each other through a photocurable resin,
wherein a curing process of the photocurable resin and the curing process of the photocurable resin of the transparent layer are simultaneously carried out.

20. The manufacturing apparatus for an optical information recording medium according to any one of claims 15 to 19, further comprising:
a means for forming an information recording layer after the signal substrate and the center substrate have been formed into an integral part.

21. The manufacturing apparatus for an optical information recording medium according to any one of claims 15 to 20, further comprising:
a means for melting by heat and bonding the signal substrate and the center substrate to each other on the side opposite to the signal face of the signal substrate.

22. The manufacturing apparatus for an optical information recording medium according to claim 15, wherein the rotation table has a function for magnetically fixing the center substrate made of a magnetic material or a material containing a magnetic material and a function for fixing the signal substrate through vacuum suction.

23. The manufacturing apparatus for an optical information recording medium according to claim 15, further comprising:
a means for applying a bonding agent or a photocurable material to the end face of the center substrate,
wherein the rotation table has a function for sucking the center substrate and the signal substrate.

24. The manufacturing apparatus for an optical information recording medium according to claim 15, further comprising:
a rotation table having a function for sucking one portion of the face of the transparent layer, and
a melt-bonding means for melting by heat and bonding the center substrate and the signal substrate to each other.
